# EUROPEAN PATENT APPLICATION

(11) **EP 1 927 807 A1**
(43) Date of publication of application: **04.06.2008**
(21) Application number: 07121482.9
(22) Date of filing: 26.11.2007
(51) Int. Cl.: F16L 37/088, F16L 37/092

(54) **A quick-release connection device, particularly for pipes and the like**

(30) Priority: 29.11.2006 IT TO20060846
(71) Applicant: KNORR-BREMSE SISTEMI PER AUTOVEICOLI COMMERCIALI S.P.A., 20043 Arcore (Milano) (IT)
(72) Inventor: Boldoni, Alessandro, 20050 Camparada (Milano) (IT); Ballabio, Fabio, 20045 Besana di Brianzo (Milano) (IT); Rapa, Antonio, 20052 Monza (Milano) (IT)
(74) Representative: Quinterno, Giuseppe

(57) **Abstract**

The device (1) comprises:
- a receiving body (2) in which is provided a passage (3) with an entrance portion (3a) having a cross section larger than that of the pipe (P) to be connected to the body (2), and a subsequent portion (3b) of larger cross section;
- a retaining member (6) in the form of an interrupted truncated conical ring, having a wedge-shaped cross section, which can be positioned in the said passage (3), and which, when at rest, has a passage cross section which is larger than the cross section of the pipe (P), and
- a locking device (7-12) having a tubular barrel (8a) which can be inserted into the passage (3) of the body (2), and which in turn forms a passage (9) which the pipe (P) can pass through in a guided and scaled way; the barrel (8a) having a terminal portion (8d) which is resiliently deformable in the radial direction, and which, when at rest, has a cross section larger than that of the entrance portion (3a), and smaller than or not more than equal to that of the subsequent portion (3b) of the passage (3), in such a way that this terminal portion of the barrel (8a) can be inserted into the passage (3) and can be snap-fitted into its aforesaid subsequent portion (3b).

The terminal portion of the barrel (8a) forms a truncated conical seat (8f) which can receive the retaining member (6) in a radially contracted condition in which this member (6) is clamped on the pipe or similar (P). The arrangement is such that pulling the pipe or similar (P) away from the receiving body (2) can cause a (further) wedging of the retaining member (6) in the terminal seat (8f) of the locking member (7-12).

## Description

The present invention relates to a quick-release connection device for articles whose general shape is substantially cylindrical, whether solid or hollow, and in particular to a quick-release connection for pipes and the like.

An object of the present invention is to provide an improved device which is composed of a limited number of parts and is reliable and secure in operation, and which enables disconnection to be carried out easily.

This and other objects are achieved according to the invention with a device for connecting a pipe or the like, comprising:
- a receiving body in which is provided a passage having an initial entrance portion communicating with the outside and having a cross section greater than that of the pipe or similar to be connected to the body, and a subsequent adjacent portion having a larger cross section;
- a retaining member in the form of an interrupted truncated conical ring, having a tapering cross section, substantially in the form of a wedge, and capable of being positioned in the said passage in such a way that it tapers towards the entrance portion of this passage; the retaining member having, when at rest, a passage cross section which is greater than the cross section of the pipe or similar, and
- a locking member having a tubular barrel which can be inserted into the said passage of the receiving body, and which forms an axial passage which the said pipe or similar can pass through in a guided and sealed way; the barrel having a terminal portion which can be radially contracted and expanded in a resilient way, and which, when at rest, has a cross section larger than that of the entrance portion, and smaller than or equal to that of the subsequent portion of the said passage, in such a way that the said terminal portion of the barrel can be inserted into the passage of the receiving body and can be snap-fitted into the aforesaid subsequent portion of the latter; the said terminal portion of the barrel forming a truncated conical end seat which can receive the retaining member in a radially contracted condition in which this member is clamped on the pipe or similar; the arrangement being such that, on completion of the connection, a pull on the tube or similar away from the receiving body causes a (further) wedging of the retaining member of the terminal seat of the locking member and a (further) clamping of the retaining member on the tube or similar, impeding the disconnection of the latter from the receiving body.

Other characteristics and advantages of the invention will become clear from the following detailed description which is given purely by way of non-limiting example with reference to the attached drawings, in which:
Figure 1 is a view in elevation and in partial section of a fluid-operated apparatus to which a pipe is connected by means of a device according to the present invention;
Figure 2 is a view on an enlarged scale of the part indicated by II in Figure 1;
Figure 3 is a perspective view of a locking member and of an annular retaining member included in a quick-release connection device according to the present invention; and
Figures 4 and 5 are sectional views taken along the line IV-IV and the line V-V, respectively, of Figure 2.

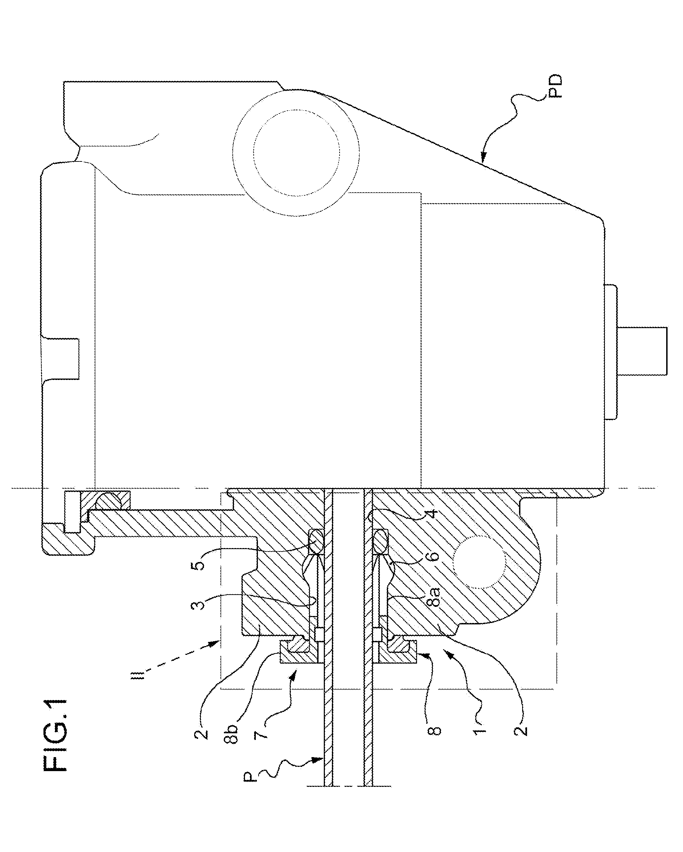

In Figure 1, PD indicates a fluid-operated apparatus to which a pipe P is connected by means of a quick-release connection device indicated as a whole by 1.

The fluid-operated device PD is, for example, a pneumatic or hydraulic device of a braking system for a motor vehicle.

The pipe P is, in particular, a relatively rigid pipe for supplying a fluid to the apparatus PD. However, the invention is not limited to the connection of rigid pipes to fluid-operated apparatus.

The quick-release connection device 1 comprises a receiving body 2. Preferably, as in the embodiment illustrated by way of example, this receiving body 2 is formed in one piece with the body of the fluid-operated device PD. However, the receiving body 2 could, as a general rule, be made separately, in other words as an independent piece.

A passage indicated as a whole by 3 is formed in the receiving body 2.

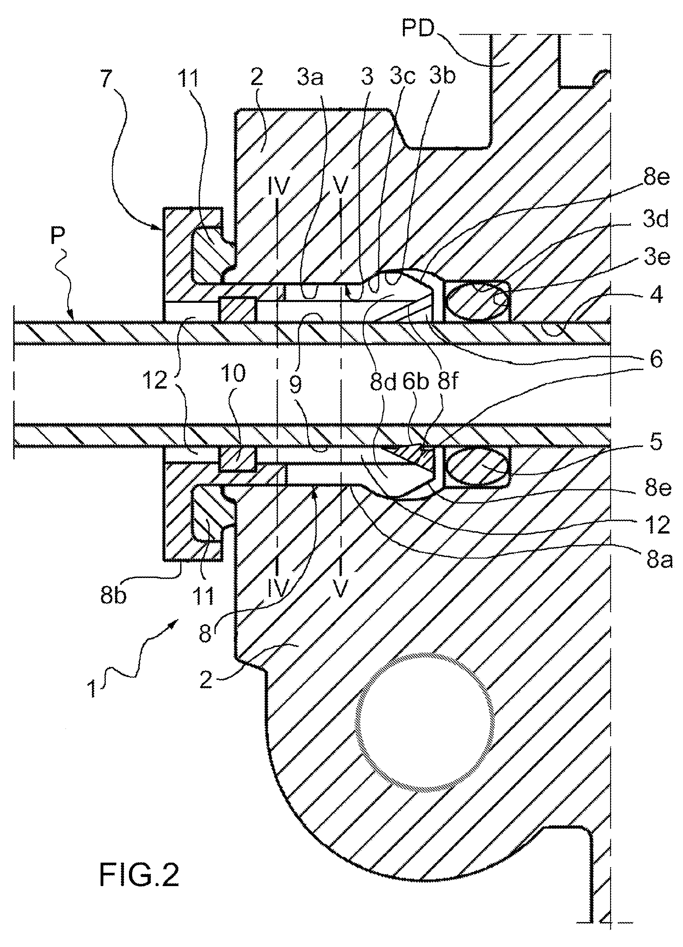

As shown in particular in Figure 2, the passage 3 has an initial or entrance portion 3a communicating with the outside and having a cross section (diameter) which is greater than that of the pipe P to be connected to the body 2.

The passage 3 also has a subsequent adjacent portion 3b, with a larger cross section.

The portions 3a and 3b of the passage 3 are conveniently connected to each other by means of a substantially truncated conical intermediate portion 3c.

With reference to Figure 2, the passage 3 has a terminal portion 3d, preferably (but not necessarily) having a cross section equal to that of the initial portion 3a. The terminal portion 3d of the passage 3 is connected to a channel 4 inside the apparatus PD, by means of a shoulder 3e.

The diameter of the channel 4 is substantially equal to the outside diameter of the pipe P.

A toroidal sealing ring (0-ring) 5 is positioned in the terminal portion 3d of the passage 3, and the pipe P can pass through it with a degree of friction, in such a way that the ring 5 adheres with a seal to its outer surface.

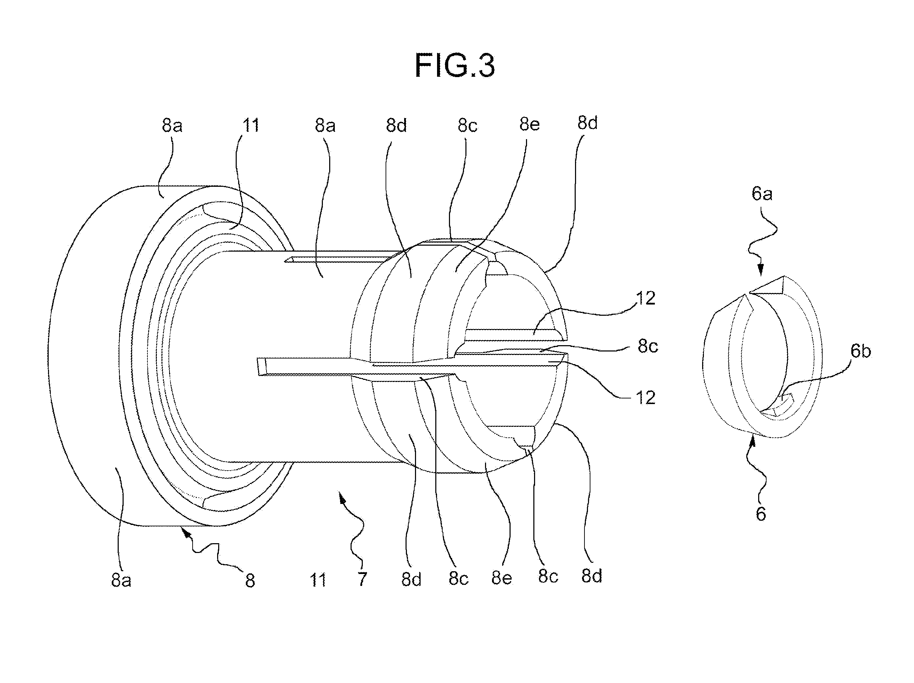

With reference to Figures 2 and 3 in particular, a quick-release connection device 1 according to the invention comprises a retaining member 6 in the form of a truncated conical ring, having an interruption indicated by 6a in Figure 3.

The annular retaining member 6 has a tapered cross section, substantially in the shape of a wedge (see Figure 2 in particular). At rest, this retaining ring 6 has a passage cross section which is slightly larger than the outside cross section of the pipe P.

During assembly, the annular retaining member 6 is positioned in the intermediate portion 3b of the passage 3 by means of a suitable tool, before the pipe P is inserted, in such a way that the taper of the member faces towards the entrance portion 3a of the passage 3, as shown in Figure 2 in particular.

With reference to Figures 2 and 3, a small projecting tooth 6b is formed in the substantially cylindrical inner surface of the annular retaining member 6, in order to engage the outer surface of the pipe P.

Finally, the connection device 1 comprises a locking device indicated as a whole by 7, comprising a member 8, made for example from moulded plastics material, having a substantially tubular barrel 8a fixed to an end head or flange 8b.

The barrel 8a of the locking member 8 can be inserted into the passage 3 of the receiving body 2, and has an internal axial passage 9 having a diameter equal to the outside diameter of the pipe P. This barrel 8a is provided internally with at least one sealing ring 10, designed to bear with a seal on the outer surface of the pipe P.

In the part facing the mouth of the passage 3 of the receiving body 2, the head 8b of the locking member 8 carries a resilient member 11 (Figures 2 and 3) designed to bear frontally with a seal on the outer surface of the body 2, around the mouth of the passage 3.

The remote portion of the barrel 8a of the locking member 8 has a plurality of longitudinal slits 8c, preferably spaced at equal angular intervals. In the example of embodiment, there are four slits 8c, but as a general rule there may be only three or more than four if necessary. Springy appendages or "petals" 8d are formed between the slits 8c of the barrel 8a. The remote terminal portion of the barrel 8a of the locking member is thus resiliently contractable and expandable in the radial direction. As shown in particular in Figures 2 and 3, this remote portion of the barrel has a larger outside diameter, substantially equal to the inside diameter of the portion 3b of the passage 3 of the receiving body 2.

The terminal outer surface 8e of the petals 8d is of truncated conical shape, to facilitate the insertion of the barrel 8a of the member 8 into the passage 3.

The barrel 8a can therefore be inserted into the portion 3a of the passage 3, and can be snap-fitted into the subsequent portion 3b of this passage.

With reference to Figure 2, a substantially truncated conical internal seat, indicated by 8f, is formed in the remote terminal end 8a of the member 8. This seat is formed at the terminal edge of the petals 8e, and its shape is substantially complementary to that of the outer surface of the retaining ring 6.

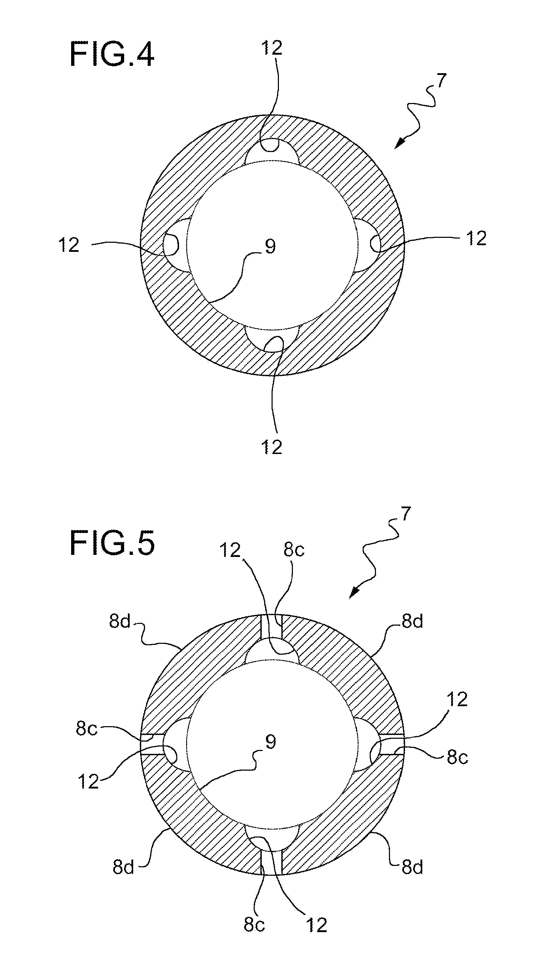

With reference to Figures 2, 4 and 5, grooves indicated by 12 can conveniently be formed in the inner surface of the barrel 8a of the locking member. In the illustrated example, these grooves are spaced at equal angular intervals, at approximately 90° from each other. As shown in Figure 2, the grooves 12 extend on both sides of the sealing ring 10 carried by the locking member 8. The function of these optional grooves 12 is described more fully below.

The connection between the pipe P and the apparatus PD using a quick-release connection device according to the invention 1 is made substantially in the following way.

In a preliminary step, the toroidal sealing ring 5 is inserted and positioned in the passage 3 of the receiving body 2. The annular retaining member 6 is then positioned downstream of the initial portion 3a of the passage 3, with its taper facing outwards. This positioning can be carried out by means of a simple tool, comprising for example a rod and a small disc inserted with a small degree of friction into the ring 6.

While the ring 6 is kept in position by means of this tool, the locking device 7 is inserted and positioned in the passage 3: the barrel 8a is inserted into the passage 3 of the receiving body 2 until its petals 8d are snap-fitted into the portion 3b of increased diameter of this passage. In this condition, the sealing ring 11 associated with the head of the locking member 8 is preferably compressed frontally against the outer surface of the body 2, around the mouth aperture of the passage 3. The retaining ring 6 is then positioned in the terminal truncated conical seat 8f of the barrel of the locking member 8.

At this point, the pipe P is inserted into the passage 9 formed in the locking member 8, until the pipe P has passed beyond the sealing rings 10 and 5 and is inserted into the channel 4 of the apparatus PD.

As a result of the insertion of the pipe P, the retaining ring 6 may be displaced to a limited extent in the axial direction, moving slightly away from the corresponding seat 8f of the locking member 8. However, if the pipe P is then pulled away from the device P again to a sufficient extent to eliminate any displacement of the retaining ring 6, the ring becomes wedged in the seat 8f of the locking member, contracting radially and tightly clamping the outer surface of the pipe P, in which the retaining tooth 6b is also engaged.

At this point the connection is stable and secure.

In order to disconnect the pipe P from the apparatus PD, the head 8b of the locking member can be pressed towards the receiving body 2, thus additionally compressing the resilient ring 11. The corresponding axial displacement of the barrel 8a causes the retaining ring 6 to slide along the surface of the pipe P towards the sealing ring 5.

If the locking member 8 is then released, it returns to the initial position because of the resilient reaction of the ring 11. However, this return is not accompanied by a corresponding return of the ring 6, which is no longer constricted radially and, because of its own resilience, can resume its resting configuration, in which it no longer tightly clamps the pipe P inside it.

The pipe P can therefore be drawn out of the locking device.

In a variant, for the purpose of disconnecting the pipe P from the apparatus PD when necessary, it is possible to insert thin tools through the penetrating grooves 12, these tools being wedged between the ring 10 and the outer surface of the pipe P, and then pushed until they engage with the outer conical surface of the retaining ring 6. By pushing these tools further, the retaining ring 6 can be forced away from the locking member 8 towards an area in which the ring 6 is no longer radially compressed, but is free to expand radially as a result of its own resilience, in such a way as to eliminate the clamping of the pipe P, which can then be drawn out.

Naturally, the principle of the invention remaining the same, the forms of embodiment and the details of construction may be varied widely with respect to those described and illustrated, which have been given purely by way of non-limiting example, without thereby departing from the scope of the invention as defined in the attached claims.

## Claims

1. A device (1) for the quick-release connection of a pipe or the like (P) to the terminal of an apparatus (PD), comprising:
- a receiving body (2), preferably made in one piece with the body of the apparatus (PD), in which is provided a passage (3) having an initial entrance portion (3a) communicating with the outside and having a cross section greater than that of the pipe (P) to be connected to the body (2), and a subsequent adjacent portion (3b) having a larger cross section;
- a retaining member (6) in the form of an interrupted truncated conical ring, having a tapering cross section, substantially in the form of a wedge, and capable of being positioned in the said passage (3) in such a way that it tapers towards the entrance portion (3a) of the said passage (3); the retaining member (6) having, when at rest, a passage cross section which is greater than the cross section of the pipe (P) or similar, and
- a locking device (7-12) having a tubular barrel (8a) which can be inserted into the said passage (3) of the receiving body (2), and which delimits an axial passage (9) which the said pipe or similar (P) can pass through in a guided and sealed way; the barrel (8a) having a terminal portion (8d) which is resiliently contractable and expandable in the radial direction, and which, when at rest, has a cross section larger than that of the entrance portion (3a), and smaller than or not more than equal to that of the subsequent portion (3b) of the said passage (3), in such a way that the said terminal portion of the barrel (8a) can be inserted into the said passage (3) and can be snap-fitted into its aforesaid subsequent portion (3b); the said terminal portion of the barrel (8a) forming a truncated conical end seat (8f) which can receive the retaining member (6) in a radially contracted condition in which this member (6) is clamped on the pipe or similar (P); the arrangement being such that pulling the pipe or similar (P) away from the receiving body (2) causes a (further) wedging of the retaining member (6) in the terminal seat (8f) of the locking device (7-12).

2. A device according to Claim 1, in which the locking device (7, 8) comprises a head (8b) connected to the said barrel (8a) and carrying a resilient annular sealing member (11) designed to bear on the outer surface of the receiving body (2) around the said passage (3); the said sealing member (11) being capable of being compressed axially to permit the translation of the locking device (7, 8) towards the receiving body (2) and the corresponding axial displacement of the annular retaining member (6) towards the inside of the said receiving body (2), and of being released subsequently to permit the return translation of only the locking device (7, 8) in such a way that the retaining member (6) can re-expand resiliently and release the pipe or similar (P).

3. A device according to Claim 1 or 2, in which the said barrel (8a) of the locking device (7, 8) has a plurality of slits (8c) between which corresponding springy terminal appendages or petals (8d) are delimited.

4. A device according to any one of the preceding claims, in which passages (12) are formed in the locking device (7, 8) to permit the insertion of tools which can be used to cause a relative displacement of the annular retaining member (6) away from the locking device (7, 8) in such a way that the said annular retaining member (6) can re-expand resiliently, thus releasing the pipe or similar (P).

5. A device according to any one of the preceding claims, in which the annular retaining member (6) is provided on its inner surface with at least one radially projecting tooth (6b) which can engage with the outer surface of the said pipe or similar (P).

6. A device according to any one of the preceding claims, in which the passage (3) of the receiving body (2) has a further subsequent terminal portion (3d) in which is placed an annular sealing member (5) through which the said pipe or similar (P) can pass with a degree of friction.

7. A device according to any one of the preceding claims, in which the barrel (8a) of the locking device (7, 8) is provided internally with a sealing ring (12) designed to bear on the outer surface of the said pipe or similar (P).
